Europäisches Patentamt

European Patent Office

Office européen des brevets

(19)

(11) **EP 1 114 930 A1**

(12) **EUROPEAN PATENT APPLICATION**
published in accordance with Art. 158(3) EPC

(43) Date of publication:
**11.07.2001 Bulletin 2001/28**

(21) Application number: **00944368.0**

(22) Date of filing: **10.07.2000**

(51) Int Cl.$^7$: **F03G 3/00**

(86) International application number:
**PCT/JP00/04587**

(87) International publication number:
**WO 01/04491 (18.01.2001 Gazette 2001/03)**

(84) Designated Contracting States:
**DE FR GB**

(30) Priority: **13.07.1999 JP 19959299**

(71) Applicants:
• **Komura, Mitsuru**
  **Kanagawa 252-0801 (JP)**
• **TOYO COMMUNICATION EQUIPMENT CO. LTD.**
  **Kouza-gun, Kanagawa 253-0192 (JP)**

(72) Inventors:
• **Komura, Mitsuru**
  **Kanagawa 252-0801 (JP)**
• **TOYO COMMUNICATION EQUIPMENT CO. LTD.**
  **Kouza-gun, Kanagawa 253-0192 (JP)**

(74) Representative: **Grosse, Wolfgang, Dipl.-Ing.**
  **Patentanwälte**
  **Herrmann-Trentepohl**
  **Grosse - Bockhorni & Partner,**
  **Forstenrieder Allee 59**
  **81476 München (DE)**

(54) **THRUST GENERATING DEVICE AND MOVING BODY**

(57)    The invention relates to a propulsive force generation system with a new principle which is not on the basis of the conventional action/reaction force defined as the so-called Newton's third law, and provides a propulsive force generation system which is usable for a flying object such as a rocket and an airplane and for a vehicular object such as a ship and a car, or for a driving force for a construction machine or the like. The propulsive force generation system is provided with one or a plurality of rotational movement mechanism in the same object, and is structured such that a propulsive force in an optional direction is generated by controlling each rotational movement patterns. The rotational movement mechanism is structured such that a weight is engaged with another end portion of a rod having one end rotatably pivoted and a desired rotational movement pattern is generated by changing a distance between the pivoted portion and the weight in accordance with the rotation. Further, the invention provides a vehicular object in which the propulsive force generation system mentioned above is mounted.

Fig. 4

**Description**

TECHNICAL FIELD

The present invention relates to a propulsive force generation system which is usable for a flying object such as a rocket and an airplane and for a vehicular object such as a ship and a car, or for a driving force for a construction machine or the like and relates to a propulsive force generation system with a new principle which is not on the basis of the conventional action/reaction force defined as the so-called Newton's third law.

BACKGROUND ART

As a conventional propulsion system for the flying objects, there are a propulsion system on the basis of the reaction from an air stream by a propeller, a system on the basis of the reaction from an jet gas stream by an internal combustion engine such as a jet engine, a rocket engine or the like, and a system on the basis of the reaction from an ion stream or a plasma stream.

Further, as a conventional propulsion system for a ship, there is mainly employed the propulsion system on the basis of the reaction from a water stream by a propeller, but there is partly employed the same propulsion system as the system for the flying objects or the propulsion system which uses the reaction between the magnet laid on the ship and the electrical current sent to the water around the ship.

Further, as a conventional propulsion system for the land vehicular object such as a car, a streetcar or the like, there is mainly employed the propulsion system on the basis of the reaction from friction between the rotating wheels mounted to the land vehicular object and the ground or between the rotating wheels and the rails placed on the ground, but there is partly employed the same propulsion system as the system for the flying objects, or the propulsion system which uses the reaction from the magnets laid on the earth.

However, the propulsion systems in accordance with the conventional art mentioned above have the following problems. That is, since the jet gas in the propulsion system using the jet gas stream, or the ion or the plasma in the propulsion system using respectively the ion stream or the plasma stream is discharged from the flying objects or the like, the propulsive force of the flying object will be lost when those are consumed. Consequently, the time thrusting a rocket or a space shuttle is limited by a quantity of the fuel producing the jet gas. Further, the ion propulsive system used for controlling a position of an artificial satellite generally has a service life of about ten years due to a consumption of the ion, and it determines the service life of the artificial satellite. Particularly, as a propulsion system in the space, there are known only the jet gas system and the plasma or ion injecting systems mentioned above, so that there is a disadvantage that the propulsive force is lost when the raw material thereof is spent fully.

Further, it is not suitable for a high speed running in respect of efficiency or the like in the propulsion system on the basis of the air stream or the water stream by the propellers.

Further, in the propulsion system using the friction with the ground or the rail, as well as there is generated a noise pollution by the friction between the wheel and the ground or the rail, and there is required a maintenance such as a periodical repair and a replacement of the wheel, there is a serious influence on our environment such as pollution of dusts produced due to the wear and tear. Especially, in the propulsion system using the friction between the rotating wheel of the vehicular object and the ground or the rail and the propulsion system on the basis of the air stream or the water stream by the propellers, there is of course a disadvantage giving a large influence to the generated propulsive force due to a difference of the environmental condition of the vehicular object, for example, an air density, a friction coefficient or the like.

The present invention has been made in order to solve many problems about the conventional propulsion system, and an object of the present invention is to provide a propulsion system and a vehicular object on the basis of a new principle, which can solve the problems up to now and generate a constant propulsive force without being influenced by an environmental condition of the vehicular object, and a particular object of the present invention is to provide a propulsion system which can continue to generate a propulsive force as long as an electric power supply source exist, since the electric power supply source such as a solar battery can be easily obtained in a space or the like.

In this case, many persons have deal with the same objects. This fact is apparent from a lot of US patents and Japanese Unexamined Patent Publications as shown in the later stages.

However, there is no structure which can be actuated with much regret. Most of US patents having the similar objects to that of the present invention are structured such that the propulsive force can be obtained by controlling by some ways so as to increase a radius of rotation in the forward moving direction in a rotational movement. The reasons why the practical level can not be obtained are that no sufficient propulsive force can be obtained, that a force in a direction opposite to the forward moving direction is larger than an average propulsive force and a violent vibration is generated (since a large force in the opposite direction is generated at a time of changing to a small radius of rotation from a large radius of rotation in addition to a centrifugal force of rotation), that a mechanism is complex and the like, as shown in the background description in the patents. Some patents propose a damper for absorbing a vibration.

Next, the patent specification and the publications in U.S.A and Japan in 1976 -1999 which have the same object that the propulsive force in one direction can be obtained from the rotational movement can be exemplified as follows.

(1) US patents relating to the invention in which the radius of rotation is changed in accordance with some ways
USP Nos. 3,968,700, 3,998,107, 4,095,460, 4,347,752, 4,579,011, 4,631,971, 4,712,439, 4,744,259, 4,770,063, 5,054,331, 5,156,058, 5,388,470, 5,488,877, 5,557,988, 5,791,188 and 5,890,400
(2) US patents relating to the invention which utilizes a rotation pattern using a planetary gear
USP Nos. 4,262,212, 4,991,453 and 5,167,163
(3) US patents relating to the invention which rotates a gyroscope
USP Nos. 4,409,856, 4,479,396, 4,784,006 and 5,090,260
(4) US patents relating to the invention in accordance with a pendulum vibration
USP Nos. 4,856,358, 5,042,313 and 5,150,626
(5) Other US patents
USP Nos. 4,238,968 and 5,937,698
(6) Japanese patent publications relating to the conventional art in which the radius of rotation is changed in accordance with some ways
Japanese Patent Application Laid-Open Nos. 56-66463, 56-146497, 59-6335, 63-13957, 7-49079, 8-284796 and 11-107905
(7) Japanese patent publications relating to the invention which utilizes a rotation pattern using a planetary gear
Japanese Patent Application Laid-Open Nos. 55-51972, 55-72500, 56-31900, 56-53998, 61-233243 and 11-107908
(8) Japanese patent publications relating to the invention which rotates a gyroscope
Japanese Patent Application Laid-Open Nos. 56-106076, 59-8599, 60-56182, 62-101600, 62-198600, 2-501583, 6-101628 and 6-317247
(9) Japanese patent publications relating to the invention in accordance with a pendulum vibration
Japanese Patent Application Laid-Open No. 64-66473

On the contrary, the propulsive force generation system in accordance with the present invention is largely different in view of the following points from the inventions described in a lot of US patents and Japanese patent publications, and corresponds to a structure which can be obtained by deeply searching and considering.

(1) A rotation pattern is not a simple circle or a simple oval, but, as the rotation pattern, an effective pattern experimentally found among a lot of rotation patterns including the simple circle and the simple oval is utilized.
(2) A fundamental circuit is characterized by additionally or differentially combining specific patterns. In fact, since a pattern of inverse rotation is placed in a line symmetrical manner in order to prevent a lateral oscillation with respect to a forward moving direction, an actual fundamental circuit is constituted by combining four specific rotation patterns.
(3) The present apparatus takes into consideration a force generated so as to obtain the specific rotation pattern, a force due to a moment of rotation and a force generated from a drive side which is changed in accordance with a rotational phase, relating to the propulsive force, in addition to a centrifugal force caused by the rotation.
(4) The present apparatus generates a force in an inverse direction with respect to the forward moving direction, but even in the simple fundamental circuit, the force is limited to a propulsive force in an inverse direction having a level equal to or less than one fifths of the average propulsive force. The propulsive force in the inverse direction can be cancelled by combining a plurality of fundamental circuits. The apparatus which does not generate the propulsive force in the inverse direction is realized due to only the propulsive force in one direction by combining eight rotation patterns at the minimum corresponding to twice the fundamental circuits.

DISCLOSURE OF THE INVENTION

In order to achieve the objects mentioned above, in accordance with the present invention, there is provided a propulsive force generation system characterized in that one or a plurality of rotational movement mechanisms are provided in the same object, and a propulsive force in a desired direction is generated by controlling each rotational movement patterns and additionally or differentially combining forces generated due to the rotational movements having different rotation patterns with respect to a propulsive direction, or additionally and differentially combining the forces generated due to the rotational movements having the different rotation patterns with respect to the propulsive direction (claim 1).

Further, as an embodiment in accordance with the present invention, the above-mentioned rotational movement mechanism is characterized by being structured such that a weight is engaged with another end portion of a rod having one end rotatably pivoted and a desired rotational movement pattern is generated by changing a distance between the above-mentioned pivoted portion and the above-mentioned weight in accordance with the rotation (claim 2).

Further, in accordance with the present invention, there is provided a vehicular object in which a propulsive force generation system is mounted, characterized in that one or a plurality of rotational movement mechanisms are provided in the same object, and a propulsive force in a desired direction is generated by controlling each rotational movement patterns and additionally or differentially combining forces generated due to the rotational movements having different rotation patterns with respect to a propulsive direction, or additionally and differentially combining the forces generated due to the rotational movements having the different rotation patterns with respect to the propulsive direction (claim 3).

Further, as an embodiment of an embodiment in accordance with the present invention, the above-mentioned rotational movement mechanism is characterized by being structured such that a weight is engaged with another end portion of a rod having one end rotatably pivoted and a desired rotational movement pattern is generated by changing a distance between the above-mentioned pivoted portion and the above-mentioned weight in accordance with the rotation (claim 4).

Further, in accordance with the present invention, there is provided a propulsive force generation system characterized in that a propulsive force in a desired direction is generated by additionally or differentially combining forces generated due to the rotational movements having one or a plurality of Pascal's limason curve rotation patterns or a similar rotation pattern and forces generated due to the rotational movements having one or a plurality of other rotation patterns with respect to a propulsive direction, or additionally and differentially combining the forces generated due to the rotational movements having one or a plurality of Pascal's limason curve rotation patterns or the similar rotation patterns and the forces generated due to the rotational movements having one or a plurality of other rotation patterns with respect to the propulsive direction (claim 5).

Further, in accordance with the present invention, there is provided a vehicular object in which a propulsive force generation system is mounted, characterized in that a propulsive force in a desired direction is generated by additionally or differentially combining forces generated due to the rotational movements having one or a plurality of Pascal's limason curve rotation patterns or a similar rotation patterns and forces generated due to the rotational movements having one or a plurality of other rotation patterns with respect to a propulsive direction, or additionally and differentially combining the forces generated due to the rotational movements having one or a plurality of Pascal's limason curve rotation patterns or the similar rotation patterns and the forces generated due to the rotational movements having one or a plurality of other rotation patterns with respect to the propulsive direction (claim 6).

In summary of the structures mentioned above, the propulsion system in accordance with the present invention is structured such that the propulsive force can be obtained only within the apparatus with having no structure for jetting or discharging something to an external portion of the apparatus and obtaining a force in connection with the external portion, so that there is provided the propulsive force generation apparatus characterized in that a plurality of rotational objects, the means for controlling the rotation patterns of the rotational objects and the drive means are provided within the apparatus, and the vehicular object utilizing the same.

BRIEF DESCRIPTION OF THE DRAWINGS

Fig. 1 is a schematic view showing an example of a rotation pattern in accordance with an embodiment of the present invention, in which Fig. 1(a) shows an A rotation pattern, Fig. 1(b) shows an A' rotation pattern, Fig. 1(c) shows a B rotation pattern and Fig. 1(d) shows a B' rotation pattern;

Fig. 2 is a schematic view showing an example of an A and A' rotation pattern generation mechanism used in the present invention, in which Fig. 2(a) is a plan view, Fig. 2(b) is a side elevational cross sectional view and Fig. 2(c) is a partly schematic view;

Fig. 3 is a schematic view showing an example of a B and B' rotation pattern generation mechanism used in the present invention, in which Fig. 3(a) is a plan view and Fig. 3(b) is a side elevational cross sectional view;

Fig. 4 is a schematic view showing an embodiment of a structure of a vehicular object in accordance with the present invention;

Fig. 5 is a schematic view showing an example of a rotation pattern in accordance with another embodiment of the present invention, in which Fig. 1(a) shows an A rotation pattern and Fig. 1(b) shows an A' rotation pattern;

Fig. 6 is a schematic view showing an example of a structure of a rotational object for generating the rotation pattern in another embodiment of the present invention, in which Fig. 6(a) is a plan view and Fig. 6(b) is a side elevational cross sectional view;

Fig. 7 is a schematic view explaining a weight track of the rotational object in the other embodiment of the present invention; and

Fig. 8 is a schematic view for explaining a basic principle of the present invention, in which Fig. 8(a) shows a rotational radius changing rotation pattern (fa(t): centrifugal force in accordance with the present rotation pattern, la(t): force applied to the rotational shaft and generated as the result of executing the present rotation pattern), Fig. 8(b) shows a uniform circle rotation pattern (fb(t): centrifugal force in accordance with the present rotation pattern, 1b(t): force applied to the rotational shaft and generated as the result of executing the present rotation pattern).

BEST MODE FOR CARRYING OUT THE INVENTION

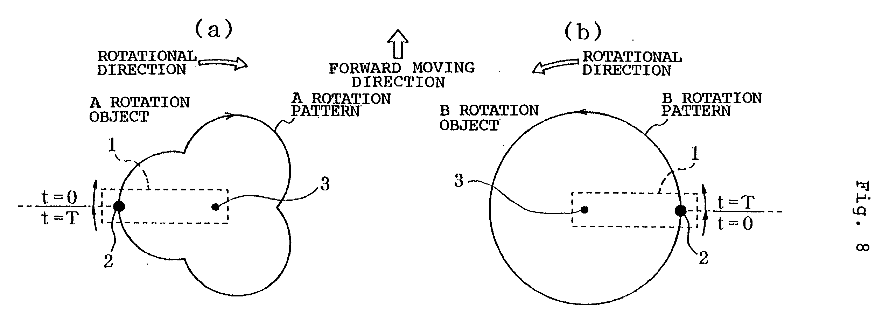

A description will be in detail given below of the present invention on the basis of an illustrated embodiment, but prior to the description, the basic principle of the present invention will be described at first with reference to Figs. 8 (a) and 8 (b).

That is, when one end of a stick (rod) with a required length is axially fixed so as to be perpendicular to the rotational axis of the motor or the like mounted to the movable vehicular object and a heavy material (weight) having a required mass is rotated in a state of being attached to another end of the stick, a centrifugal force is generally generated in the heavy material. For example, in the case of a uniform circular motion as shown in Fig. 8(b), the centrifugal force has the same magnitude in all the directions, so that when the structure is made such that the object supporting the rotational axis can freely move in all the directions, the object can move in all the directions in accordance with the centrifugal force, but is returned to the initial position after one period of the circular motion and does not move in one direction. The force applied to the rotational axis for rotation the object is defined as lb(t). Further, for example, even in the rotational movement having an oval rotation pattern, when combining the centrifugal forces due to the rotational movement and the force applied to the rotational axis generated so as to obtain the oval pattern or the like, the object supporting the rotational movement moves in all the directions in accordance with the forces, but returns to the initial position after one period of the rotational movement and does not move in one direction.

Next, for example, a consideration will be given of the case of the rotation pattern shown in Fig. 8(a), that is, the case that one of a rod 1 is rotatably pivoted and a weight 2 is added to another end of the rod 1 and rotated. In this case, when a consideration will be given of the case of being controlled so that a distance between the weight 2 and a shaft 3, that is, a rotational radius is reduced at each 120 degrees at a time of rotating one time (360 degrees), a force applied to the rotary shaft 3 includes a centrifugal force fa(t) in accordance with the rotation pattern, a force la(t) generated by controlling so as to change a track of the weight 2 together with a time t in correspondence to the rotation pattern, a force generated from a drive side and the like, and a predetermined deviating force is generated at each of the rotational angles.

The inventor of the present invention has found that a force applied in one direction, that is, a propulsive force is generated by receiving two rotation patterns shown in Figs. 8(a) and 8(b) in the same solid and suitably selecting the masses ma and mb of the weights in the respective rotational objects or the respective rotational patterns.

That is, when the force components in the forward moving direction in the drawing of four forces fa(t), la(t), fb(t), which is a centrifugal force caused by the rotation pattern shown in Fig. 8(b), and lb(t), which is a force generated by controlling the locus of weight 2 so as to change pursuant to time t and the rotation pattern shown in Fig. 8(b), are set to fap(t), lap(t), fbp(t) and lbp(t), the rotational speed is sufficiently large, the weight is heavy and the forces fap(t), lap(t), fbp(t) and lbp(t) are dominant, the value k in the formula (1) may be a certain limited value instead of 0. If k is the limited value, the object will move at every round of rotation and will obtain the propulsive force.

$$\int_{t=0}^{t=T} [\, f_{ap}(t) + l_{ap}(t) + f_{bp}(t) + l_{bp}(t) \,]\, dt = k \quad ...(1)$$

It becomes advance which is generally called two step advance one step retreat to the advance direction at every round of rotation, in accordance with the principle, if the pattern to a rotational object, the value of each weight and the like are not set up ideally, but in the case that the combination of the rotation pattern and the mass of each weight is suitable, equipment which moves only in one direction without retreating can be realized. In the experiment actually performed, a limit exists in the rotational speed and the mass of weight and a little amount of propulsive force in the rearward moving direction remains, but if the rotational speed is made high, various kinds of rotation patterns are combined and the mass of weight is suitably set up, a smooth propulsive force can be obtained mostly continuously.

The forward moving speed will be increased and reduced in accordance with either or those combination of the size of the rotation pattern, the mass of each heavy material (weight), and the rotational speed.

As mentioned above, in accordance with the present invention, since the structure is made such that the propulsive force is generated in accordance with the motion of the rotation mechanism received within the solid, and neither the high speed air stream nor the water stream is generated outside or the friction between the rotating wheel and the ground or the rail is not generated as the conventional propulsion system, many conventional problems can be sharply solved.

A description will be in detail given below of the present invention on the basis of the illustrated embodiment.

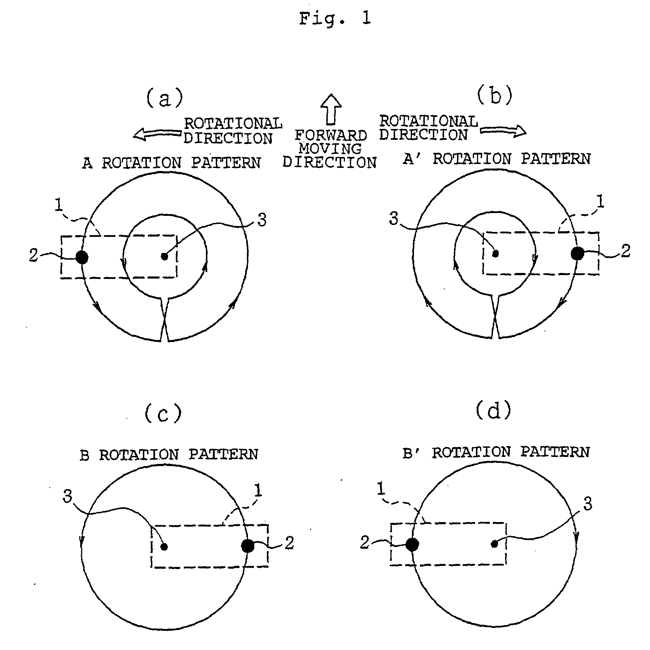

Fig. 1 is a schematic view showing an example of a rotation pattern of a rotational object in a propulsive force generation system in accordance with the present invention. In this embodiment, there are four rotational objects in these example drawings, and each pattern traced by the weight attached to the rotating rod in each of the four rotational objects, is to move as shown in Figs. 1(a), 1(b), 1(c) and 1(d). That is, the rotation pattern shown in Figs. 1(a) and 1(b) is controlled so that the locus of the weight 2 positioned at another end of the rod 1 which is attached to the rotational axis performs an oval movement of two-folds with large and small sizes, and the rotational directions of Figs. 1(a) and 1(b) are mutually reverse. Hereinafter, the pattern shown in Fig. 1(a) is called as an A pattern and the pattern shown in Fig. 1(b) is called as an A' pattern. A description will be in detail given below of this. In the A pattern in Fig. 1(a), the weight 2 on the large oval locus carries out a left rotation (counterclockwise rotation) on the drawing, and it shifts to the small ellipse orbit with a small rotation radius at lower part position in the drawing, and it is again returned to the large ellipse orbit mentioned above after one rotation of the small oval locus, and then reaches an initial position. On the other hand, in the A' pattern in Fig. 1(b), the weight 2 carries out a right rotation (clockwise rotation) along a large ellipse and a small ellipse pattern in the drawing, and it shifts to the small ellipse orbit with a small rotation radius at the lower part position in the drawing in the same manner as that mentioned above, and it is again returned to the large ellipse orbit mentioned above after one rotation of the small oval locus, and then, reaches an initial position, that is, the weight 2 follows a reverse locus to the locus in Fig. 1(a). On the other hand, Figs. 1(c) and 1(d) show a uniform circular motion locus rotating in the opposite directions mutually, and are respectively called as a B pattern and a B' pattern.

The rotation object (hereinafter, refer to as an A rotation object) which shows the A pattern mentioned above and the rotation object (hereinafter, refer to a B rotation object) which shows the B rotation pattern, are fixed on the same rotation axis. If the weight of the A rotation object starts from the large pattern of an ellipse locus, moves around the small pattern of an ellipse locus, returns again to the large pattern of the ellipse locus and finally reaches the original position during one rotation of the weight of the B rotation object. That is, while the weight of the B rotation object rotates once, the weight of the A rotation object can rotate twice of the ellipse locus (there are large and small sizes) by a synchronization, a propulsive force will be generated in the required direction.

In this case, the A' rotation pattern in which the weight or the like is described in a symmetrical manner in a right side of the A rotation pattern with having a reverse rotation direction, and the B' rotation pattern described in the same manner as A', cancel the force in the lateral direction with respect to the forward moving direction at a time of rotating the A and B rotation objects, and preventing from laterally oscillating.

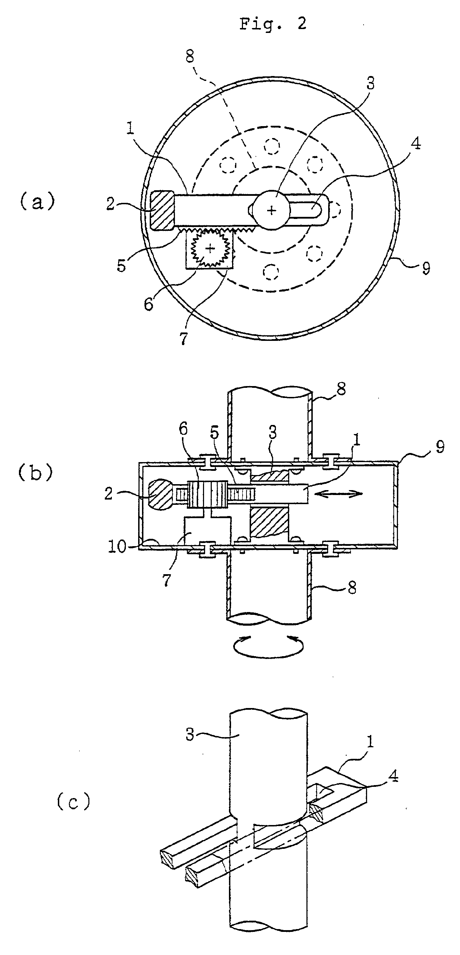

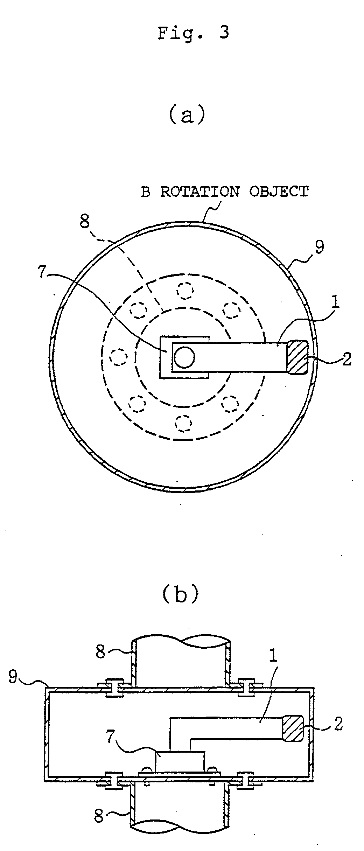

When the applicant placed the rotational mechanisms describing the rotation patterns mentioned above into the same system and made it rotate, it becomes the movement that repeats advance and some retreat, but it was confirmed that the propulsive force was clearly produced in the upward direction with respect to the drawing. In this case, there exist structures shown in Figs. 2 and 3 as means for constituting so that the loci as shown in Figs. 1(a) and 1(b) can be drawn, though these are not restricted. That is, Fig. 2 is a schematic view showing one embodiment of a rotation mechanism in accordance with the present invention, which is an example of a principal part structure outline figure for drawing the loci of the double ellipse shown in Figs. 1(a) and 1(b) mentioned above, Fig. 2(a) is a plan view, Fig. 2(b) is a side elevational view and Fig. 2(c) is a partially detail view. The rotation object structure shown in this example is structured such that the weight 2 is added to one end of the rod 1 and the slit 4 having a desired length is provided in another end portion of the rod 1, and the center portion of the shaft 3 formed in a manner mentioned below extends through the slit 4, whereby the rod 1 is axially supported by the shaft 3 in a freely movable state.

Further, a partly linear gear (rack) 5 is formed in a side portion of the rod 1, and a circular gear (pinion) 6 is brought into contact with the rack 5 in a fitted manner. The rod 1 and the pinion 6 commonly rotate in an integral manner and the structure is made such that the rod 1 horizontally moves due to the rotation of the pinion. The motion can be easily understood by referring to Figs. 2(b) and 2(c). That is, Fig. 2(b) is a side elevational cross sectional view, and the weight 2 is fixed to one end of the rod 1, the rack 5 is formed on a side surface of the rod 1, and a stepping motor 7 is connected to a rotation axis of the pinion 6 fitted thereto. The stepping motor 7 is fixed to a plinth 10 of a cylinder body 9 supported to a body rotation axis 8 at upper and lower sides.

Further, the shaft 3 connected to the center portion of the cylinder body 9 and placed on the center of the cylinder body extends through the slit 4 at another end portion of the rod 1, but the structure is made, as shown in Fig. 2(c), such that a cut is formed in both sides of the slit penetrating portion of the shaft 3 and a cross sectional shape perpendicular to the shaft is formed in a rectangular shape. As a result, the structure is made such that the rotation of the shaft 3 connected to the body rotation axis 8 is transmitted to the rod 1, and the rod 1 freely moves in a longitudinal direction of the slit.

A description will be given of an operation in the structure mentioned above. At first, when the body rotation axis 8 is rotated by a second motor (which is omitted to be illustrated), the shaft 3 is integrally rotated together with the cylinder body 9, and the rotation motion is transmitted to the rod 1 via the slit portion. When the rotation is continued in this condition, the whole of the cylinder body 9 is rotated with setting the distance between the center of the shaft 3 and the weight 2 to a radius, in the rod, but when further driving the stepping motor 7 in correspondence to the rotation, the pinion 6 is rotated, and the distance between the shaft 3 and the weight 2 changes due to the operation with the rack 5 fitted thereto. Accordingly, when driving the stepping motor at a predetermined cycle in synchronous with the rotation of the cylinder body 9, it is possible to create the rotation pattern of the rod shown in Figs. 1(a) and 1(b).

Fig. 3 is a schematic view showing a mechanism structure example for generating a uniform rotation pattern shown in Figs. 1(c) and 1(d). In this example, in order to make the same structure as that of the example shown in Fig. 2, a rotation rod 11 having one end connected to the rotation axis of the motor 7 is received within the cylinder body 9 supported by the body rotation axis 8 at the upper and lower sides, and the weight 2 is added to another end of the rotation rod 11. In this structure, the motor 7 is fixed to the plinth of the cylinder body 9. In this case, since it is sufficient that the B and B' rotation bodies perform the simple circular motion, another end of the rotation rod 11 may be only connected to the shaft 3 directly connected to the rotation axis 8 of the cylinder body 9 so as to secure the circular motion, but as in the present embodiment, in order to rotate in a complex period as the weight of the B and B' rotation object rotates one turn during two turns of the body rotation axis, it is advantageous that the motor 7 is provided as illustrated. However, in order to reduce the weight, the structure may be made such that the motor is removed and the rotation condition mentioned above is satisfied by the combination of the gears.

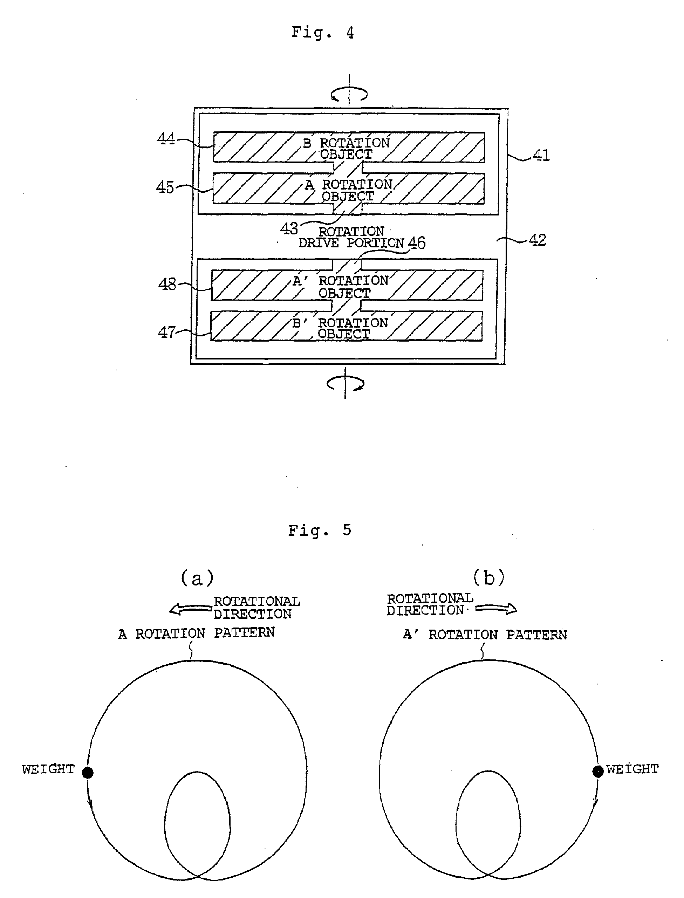

Fig. 4 is a side elevational cross sectional view showing a state that four rotation objects are received within the same system. The structure is made such that a rotation drive circuit constituted by the electric motor and the gears and the like is provided in a rotation drive part 42 connected to a system case 41, and the B rotation object 44 and the A rotation object 45 mentioned above are arranged above in such a manner as to connect to the rotation axis 43 for transmitting the rotation of the motor, and the B' rotation object 47 and the A' rotation object 48 mentioned above are arranged below in such a manner as to connect to the rotation axis 46 connected to the motor in the same manner. In this case, as already described, since the A and B rotation objects and the A' and B' rotation objects should be mutually rotated in the reverse direction, the upper and lower rotation axes 43 and 46 are set to be mutually rotated in the reverse direction in Fig. 4. In accordance with the experiment of the applicant, the composition in which four structures constituted by four rotation objects shown in Fig. 4 are arranged, when the size of the rotation pattern of each of the rotation objects, the mass of each of the weights and the like are suitably set, the whole weight is about 21 kg, the mass of the weight is totally about 6 kg, and the B rotation object is rotated about three times at every one second, it was roughly confirmed that it moves at a speed of about 600 meters per hour. In this experiment, a substantial speed was calculated from observing results of the motion in the case that experiment system put on casters on the base was run on the plane covered by a board or the case that the system put a vinyl sheet and performing a simple waterproofing was floated on the water. In both cases, it was confirmed that the substantially same propulsive force is generated. Further, the experiment was not performed in a weightless vacuum condition, but it is expected that the same propulsive force can be obtained.

In this case, since the experiment mentioned above is of a small scale and a manufacturing accuracy of the apparatus or the like is imperfect, an energy conversion efficiency, that is, an efficiency for converting a motor torque to a propulsive force in the system is not necessarily perfect as a theoretical manner, but if it is manufactured still with high precision, it is expected that much more efficient propulsive generation can be achieved. Further, even in the case that the experimental conditions mentioned above are maintained, when the mass of the weight mentioned above is set to be 10 times, the rotation speed seen with the B rotation object is set to 30 times per second in this system, and the other conditions are set to be the same, the propulsive force will theoretically become 100 times or more times, and the apparatus propulsive speed will become significantly large.

The propulsion system in accordance with the present invention requires an energy for rotating each of the rotation bodies, but since the system is not based on an action and reaction and move forward by the propulsion system itself without relating to the outside portion, the problems of the propulsion system in accordance with the conventional art mentioned above can be widely cancelled.

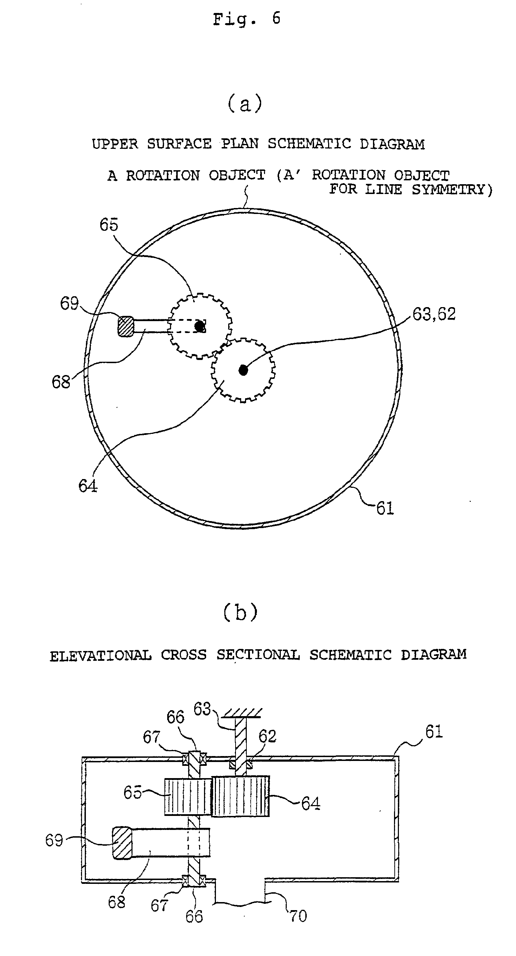

Fig. 5 is a rotation pattern view for explaining another embodiment in accordance with the present invention. The rotation pattern shown in this example is called as a limason curve of Pascal. That is, even when using the pattern in accordance with the limason curve in place of the A and A' rotation patterns shown in Figs. 8(a), 1(a) and 1(b), it is possible to generate the propulsive force in the same manner as mentioned above.

Fig. 6 shows an example of a rotation object structure for generating the limason curve, in which Fig. 6(a) is a plan view and Fig. 6(b) is a side elevational cross sectional view. That is, a first gear 64 is bonded to a support axis 63 extending through a center portion 62 of a cylinder body 61, and the support axis 63 is fixed to a vehicular object (solid) case (not shown) as shown in Fig. 6 (a), 6(b). Further, a second gear 65 (called as a rotation gear) fitted and brought into contact with a peripheral gear of the first gear 64 mentioned above and having the same structure is arranged, but an axis 66 of the rotation gear 65 is rotatably pivoted to upper and lower portions of the cylinder body 61 by a bearing mechanism 67 such as a ball bearing or the like. Further, one end of a rod 68 having a desired length is fixed to the axis 66 of the second rotation gear, and a weight 69 having a desired mass is added to another end of the rod. In this case, a body axis 70 for rotating the cylinder body 61 is connected to the center portion in the lower portion of the cylinder body 61 in the same manner as that of the preceding embodiment.

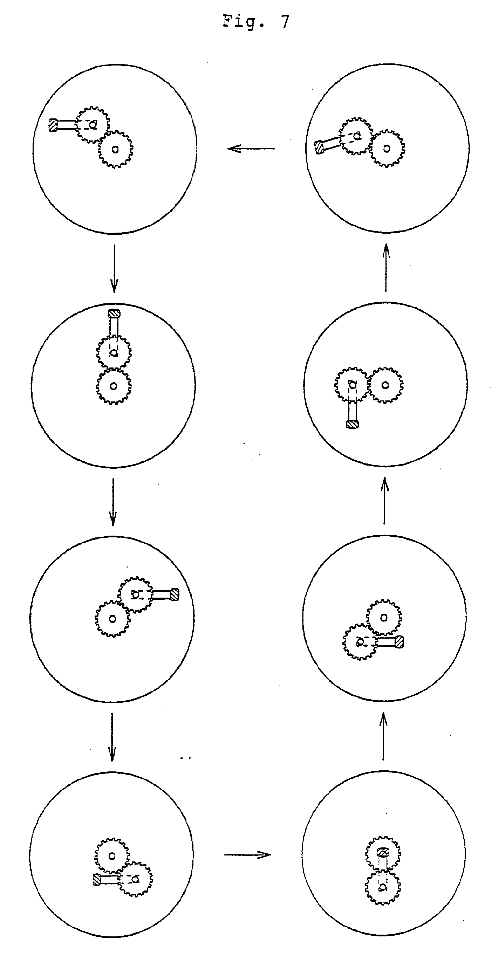

Here, when the body axis 70 is rotated at one time in the structure constituted in this manner, the weight 69 added to the rod 68 draws the limason curve as shown in Fig. 5(a). Since a state that the weight 69 draws the limason curve can be easily understood by referring to Fig. 7, the detailed description will be omitted. Then, if those structures as mentioned above are mounted in place of the A and A' rotation bodies 45 and 48 in Fig. 4 and the rotation cycles of the B and B' rotation bodies are made coincide with the rotation cycles of the A and A' rotation bodies, it is possible to generate the propulsive force in a predetermined direction in the same manner.

Here, in the case of arranging the A and A' rotation bodies shown in Fig. 6 so as to be overlapped with the B and B' rotation bodies in the manner as shown in Fig. 4, since it is necessary to fixe one end of the support axis 63 in Fig. 6 to the system (for example, the cylinder body 41 in Fig. 4), the A rotation object and the B rotation object shown in Fig. 4 are replaced, the support axis of the A rotation object is fixed to the ceiling of the cylinder body 41, the A' rotation object and the B' rotation object disposed in the lower portion are replaced and the support axis of the A' rotation object is fixed to the bottom part of the cylinder body 41.

As mentioned above, the description is given of some particular embodiments in accordance with the present invention, but the structure is not limited to these embodiments at a time of realizing the present invention, and various kinds of modifications can be performed.

For example, the structure may be made such that a simple flat plate is formed as the plinth and performs the same function as that of the embodiment mentioned above, in place of the cylinder body which receives the rod or the like to be rotated. Further, the number of the mounted rotation obgects is not limited to four, and may be set to be equal to or less. Further, the structure may be made such that a lot of rotation objects may be complicatedly combined.

Further, it is not necessary that each of the rotation objects is arranged on the same axis, and various kinds of gears may be arranged on a flat surface in a combined manner.

Since the present invention generates the propulsive force on the basis of the principle mentioned above, the friction between the rotating wheel and the ground or the rail does not relates to the propulsive force and the airjet or the like does not exist, as it is different from the conventional propulsion system, so that it is possible to prevent the wheel abrasion and the dust from being generated.

Further, since the propulsive force is generated in accordance with the combination of the various kinds of rotation motions obtained in a comparatively easy manner, there is a high possibility that the energy efficiency becomes excellent in comparison with the conventional propulsive force generation system, and it is expected as epoch-making propulsive force means.

Further, the propulsive force generating direction can be changed to a desired direction only by shifting the rotation timing of each of the rotation objects a little. Accordingly, as is different from the conventional propulsive force generating means, it is possible to achieve a complex motion which can not be realized conventionally.

In particular, in space, since an electric power can be easily obtained by the solar cell or the like, the propulsive force can be generated as long as an electric power will be supplied if a motor is rotated with using this as an energy, so that it is preferable as a source of propulsive force, such as the flying objects for observing various kinds of stars in space.

**Claims**

1. A propulsive force generation system characterized in that one or a plurality of rotational movement mechanisms are provided in the same object, and a propulsive force in a desired direction is generated by controlling each roational movement pattern and additionally or differentially combining forces generated due to the rotational movements having different rotation patterns with respect to a propulsive direction, or additionally and differentially combining the forces generated due to the rotational movements having the different rotation patterns with respect to the propulsive direction.

2. A propulsive force generation system as claimed in claim 1, characterized in that said rotational movement mechanism is structured such that a weight is engaged with another end portion of a rod having one end rotatably pivoted and a desired rotational movement pattern is generated by changing a distance between said pivoted portion and said weight in accordance with the rotation.

3. A vehicular object in which a propulsive force generation system is mounted, characterized in that one or a plurality of rotational movement mechanisms are provided in the same object, and a propulsive force in a desired direction is generated by controlling each rotational movement pattern and additionally or differentially combining forces generated due to the rotational movements having different rotation patterns with respect to a propulsive direction, or additionally and differentially combining the forces generated due to the rotational movements having the different rotation patterns with respect to the propulsive direction.

4. A vehicular object as claimed in claim 3, characterized in that said rotational movement mechanism is structured such that a weight is engaged with another end portion of a rod having one end rotatably pivoted and a desired rotational movement pattern is generated by changing a distance between said pivoted portion and said weight in accordance with the rotation.

5. A propulsive force generation system characterized in that a propulsive force in a desired direction is generated by additionally or differentially combining forces generated due to the rotational movements having one or a plurality of Pascal's limason curve rotation patterns or a similar rotation patterns and forces generated due to the rotational movements having one or a plurality of other rotation patterns with respect to a propulsive direction, or additionally and differentially combining the forces generated due to the rotational movements having one or a plurality of Pascal's limason curve rotation patterns or the similar rotation patterns and the forces generated due to the rotational movements having one or a plurality of other rotation pattern with respect to the propulsive direction.

6. A vehicular object in which a propulsive force generation system is mounted, characterized in that a propulsive force in a desired direction is generated by additionally or differentially combining forces generated due to the rotational movements having one or a plurality of Pascal's limason curve rotation pattern or a similar rotation pattern and forces generated due to the rotational movements having one or a plurality of other rotation pattern with respect to a propulsive direction, or additionally and differentially combining the forces generated due to the rotational movements having one or a plurality of Pascal's limason curve rotation pattern or the similar rotation pattern and the forces generated due to the rotational movements having one or a plurality of other rotation pattern with respect to the propulsive direction.

**Amended claims under Art.19.1 PCT**

1. A propulsive force generation system characterized in that a plurality of rotational movement mechanisms are provided in the same object, and a propulsive force in a desired direction is generated at least by driving a first rotational movement having one Pascal's limason curve rotation pattern or a rotation pattern similar to the limason curve rotation pattern and a second rotational movement having another rotation pattern being different from said first rotational movement pattern by means of the same drive circuit, and canceling an intermittent reverse propulsive force in accordance with mutual operation among centrifugal forces and rotational moments generated due to said first and second rotational movements in each of the rotational movements.

2. A vehicular object in which a propulsive force generation system is mounted, characterized in that a plurality of rotational movement mechanisms are provided in the same object, and a propulsive force in a desired direction is generated at least by driving a first rotational movement having one Pascal's limason curve rotation pattern or a rotation pattern similar to the limason curve rotation pattern and a second rotational movement having another rotation pattern being different from said first rotational movement pattern by means of the same drive circuit, and canceling an intermittent reverse propulsive force in accordance with mutual operation among centrifugal forces generated and rotational moments due to said first and second rotational movements in each of the rotational movements.

3. A propulsive force generation system characterized in that a plurality of rotational movement mechanisms are provided in the same object, and a propulsive force in a desired direction is generated at least by driving a first rotational movement having one Pascal's limason curve rotation pattern or a rotation pattern similar to the limason curve rotation pattern and a second rotational movement drawing another circle or oval and having a rotation pattern with an average rotation angle which is 1/n (n is an integral number equal to or more than 2) times with respect to an average rotation angle of said first rotational movement by means of the same drive circuit, and canceling an intermittent reverse propulsive force in accordance with mutual operation among centrifugal forces and a rotational moments generated due to said first and second rotational movements in each of the rotational movements.

**4.** A vehicular object in which a propulsive force generation system is mounted, characterized in that a plurality of rotational movement mechanisms are provided in the same object, and a propulsive force in a desired direction is generated at least by driving a first rotational movement having one Pascal's limason curve rotation pattern or a rotation pattern similar to the limason curve rotation pattern and a second rotational movement drawing another circle or oval and having a rotation pattern with an average rotation angle which is 1/n (n is an integral number equal to or more than 2) times with respect to an average rotation angle of said first rotational movement by means of the same drive circuit, and canceling an intermittent reverse propulsive force in accordance with mutual operation among centrifugal forces and rotational moments generated due to said first and second rotational movements in each of the rotational movements.

**5.** A propulsive force generation system characterized in that a plurality of rotational movement mechanisms are provided in the same object, and a propulsive force in a desired direction is generated by controlling each of rotational movement patterns and differentially combining with respect to a propulsive direction so as to reduce an intermittent reverse propulsive force at least forces generated in accordance with a first rotational movement having a Pascal's limason curve rotation pattern or a rotation pattern similar to the limason curve rotation pattern and generated in accordance with a second rotational movement having another rotation pattern being different from said first rotational movement pattern.

**6.** A vehicular object in which a propulsive force generation system is mounted, characterized in that a plurality of rotational movement mechanisms are provided in the same object, and a propulsive force in a desired direction is generated by controlling each of rotational movement patterns and differentially combining with respect to a propulsive direction so as to reduce an intermittent reverse propulsive force at least forces generated in accordance with a first rotational movement having a Pascal's limason curve rotation pattern or a rotation pattern similar to the limason curve rotation pattern and generated in accordance with a second rotational movement having another rotation pattern being different from said first rotational movement pattern.

**7.** (Added) A propulsive force generation system characterized in that a plurality of rotational movement mechanism is provided in the same object, and a propulsive force in a desired direction is generated by controlling each of rotational movement patterns and differentially combining at least forces generated in accordance with a first rotational movement having a Pascal's limason curve rotation pattern or a rotation pattern similar to the limason curve rotation pattern and generated in accordance with a second rotational movement having another rotation pattern being different from said first rotational movement pattern and having an average rotation angle being 1/n (n is an integral number equal to or more than 2) times with respect to an average rotation angle of said first rotational movement so as to reduce an intermittent reverse propulsive force.

**8.** (Added) A vehicular object in which a propulsive force generation system is mounted, characterized in that a plurality of rotational movement mechanism is provided in the same object, and a propulsive force in a desired direction is generated by controlling each of rotational movement patterns and differentially combining at least forces generated in accordance with a first rotational movement having a Pascal's limason curve rotation pattern or a rotation pattern similar to the limason curve rotation pattern and generated in accordance with a second rotational movement having another rotation pattern being different from said first rotational movement pattern and having an average rotation angle being 1/n (n is an integral number equal to or more than 2) times with respect to an average rotation angle of said first rotational movement so as to cancel an intermittent reverse propulsive force.

**9.** (Added) A propulsive force generation system characterized in that a plurality of rotational movement mechanism is provided in the same object, and a propulsive force in a desired direction is generated by controlling each of rotational movement patterns, and additionally or differentially combining at least forces generated in accordance with a first rotational movement having one rotational movement pattern and generated in accordance with a second rotational movement having another rotation pattern being different from said first rotational movement pattern, in which the average rotation angle of said first rotational movement pattern is an integral times equal to or more than 2 of the average rotation angle of said second rotational movement pattern, or additionally and differentially combining at least forces generated in accordance with the a first rotational movement having one movement pattern and generated in accordance with the second rotational movement having rotation pattern being different from said rotation movement pattern, in which the average rotation angle of said first rotational movement pattern is an integral times equal to or more than 2 of the average rotation angle of said second rotational movement pattern so as to cancel an intermittent reverse propulsive force.

**10.** (Added) A vehicular object in which a propulsive force generation system is mounted, characterized in that a plurality of rotational movement mechanisms are provided in the same object, and a propulsive force in a desired direction is generated by controlling each of rotational movement patterns, and additionally or differentially combining at least forces generated in accordance with a first rotational movement having one rotational movement pattern and generated in accordance with a second rotational movement having another rotation pattern being different from said first rotational movement pattern, in which the average rotation angle of said first rotational movement pattern is an integral times equal to or more than 2 of the average rotation angle of said second rotational movement pattern, or additionally and differentially combining at least the forces generated in accordance with a first rotational movement having one rotational movement pattern and a generated in accordance with second rotational movement having another rotation pattern being different from said first rotational movement pattern, in which the average rotation angle of said first rotational movement pattern is an integral times equal to or more than 2 of the average rotation angle of said second rotational movement pattern so as to cancel an intermittent reverse propulsive force.

**11.** (Added) A propulsive force generation system characterized in that a plurality of rotational movement mechanism are provided in the same object, and a propulsive force in a desired direction is generated by controlling each rotational movement pattern and additionally or differentially combining forces generated due to the rotational movements having different rotation patterns with respect to a propulsive direction so as to cancel an intermittent reverse propulsive force, or additionally and differentially combining the forces generated due to the rotational movements having the different rotation patterns with respect to the propulsive direction so as to cancel the intermittent reverse propulsive force.

**12.** (Added) A vehicular object in which a propulsive force generation system is mounted, characterized in that a plurality of rotational movement mechanism is provided in the same object, and a propulsive force in a desired direction is generated by controlling respective rotational movement patterns and additionally or differentially combining forces generated due to the rotational movements having different rotation patterns with respect to a propulsive direction so as to cancel an intermittent reverse propulsive force, or additionally and differentially combining the forces generated due to the rotational movements having the different rotation patterns with respect to the propulsive direction so as to cancel the intermittent reverse propulsive force.

**13.** (Added) A propulsive force generation system as claimed in claim 11, characterized in that said rotational movement mechanism is structured such that a weight is engaged with another end portion of a rod having one end rotatably pivoted and a desired rotational movement pattern is generated by changing a distance between said pivoted portion and said weight by the other drive circuit.

**14.** (Added) A vehicular object in which a propulsive force generation system is mounted, characterized in that said rotational movement mechanism is structured such that a weight is engaged with another end portion of a rod having one end rotatably pivoted and a desired rotational movement pattern is generated by changing a distance between said pivoted portion and said weight by the other drive circuit.

Fig. 1

(a)                                    (b)

ROTATIONAL        ⇑        ROTATIONAL
DIRECTION    FORWARD   DIRECTION
              MOVING
A ROTATION PATTERN  DIRECTION  A' ROTATION PATTERN

(c)                                    (d)

B ROTATION PATTERN          B' ROTATION PATTERN

Fig. 2

(a)

(b)

(c)

Fig. 3

(a)

B ROTATION OBJECT

(b)

Fig. 4

44 — B ROTATION OBJECT — 41

45 — A ROTATION OBJECT

43 — ROTATION DRIVE PORTION 46 — 42

48 — A' ROTATION OBJECT

47 — B' ROTATION OBJECT

Fig. 5

(a)

ROTATIONAL DIRECTION ←

A ROTATION PATTERN

WEIGHT ●

(b)

ROTATIONAL DIRECTION ⟹

A' ROTATION PATTERN

● WEIGHT

Fig. 6

(a)

UPPER SURFACE PLAN SCHEMATIC DIAGRAM

A ROTATION OBJECT (A' ROTATION OBJECT
FOR LINE SYMMETRY)

65

69

68

63,62

64

61

(b)

ELEVATIONAL CROSS SECTIONAL SCHEMATIC DIAGRAM

66  63

67      62

61

65      64

69

68   67   66

70

Fig. 7

(a)

ROTATIONAL DIRECTION

FORWARD MOVING DIRECTION

(b)

ROTATIONAL DIRECTION

A ROTATION OBJECT

A ROTATION PATTERN

B ROTATION OBJECT

B ROTATION PATTERN

1

3

$t=0$
$t=T$

2

3

1

$t=T$
$t=0$

2

Fig. 8

EP 1 114 930 A1

18

<div style="text-align:center">**INTERNATIONAL SEARCH REPORT**</div>

| | International application No. |
|---|---|
| | PCT/JP00/04587 |

| A. CLASSIFICATION OF SUBJECT MATTER |
|---|
| Int.Cl$^7$ F03G3/00 |

According to International Patent Classification (IPC) or to both national classification and IPC

| B. FIELDS SEARCHED |
|---|
| Minimum documentation searched (classification system followed by classification symbols) |
| Int.Cl$^7$ F03G3/00 |

Documentation searched other than minimum documentation to the extent that such documents are included in the fields searched

Jitsuyo Shinan Koho          1922-1996     Toroku Jitsuyo Shinan Koho  1994-2000
Kokai Jitsuyo Shinan Koho    1971-2000     Jitsuyo Shinan Toroku Koho  1996-2000

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X<br>Y | JP, 6-66245, A (Yoshinori ITAKURA),<br>08 March, 1994 (08.03.94),<br>Claim 1; Fig. 1<br>Claim 1; Par. Nos.[0001]; Fig. 1    (Family: none) | 1,3<br>4,6 |
| X<br>Y | JP, 59-141704, A (Osaka Fuji Kogyo K.K.),<br>14 August, 1984 (14.08.84),<br>Full text; Figs. 1, 52 to 53<br>Full text; Figs. 1, 52 to 53    (Family: none) | 1-2,5<br>4,6 |
| X | US, 5488877, A (Richard L. Lieurance),<br>06 February, 1996 (06.02.96),<br>Full text; Figs. 7, 9 | 1 |

☐ Further documents are listed in the continuation of Box C.     ☐ See patent family annex.

| * Special categories of cited documents: | "T" later document published after the international filing date or |
|---|---|
| "A" document defining the general state of the art which is not considered to be of particular relevance | priority date and not in conflict with the application but cited to understand the principle or theory underlying the invention |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such |
| "O" document referring to an oral disclosure, use, exhibition or other means | combination being obvious to a person skilled in the art |
| "P" document published prior to the international filing date but later than the priority date claimed | "&" document member of the same patent family |

| Date of the actual completion of the international search | Date of mailing of the international search report |
|---|---|
| 26 September, 2000 (26.09.00) | 10 October, 2000 (10.10.00) |

| Name and mailing address of the ISA/ | Authorized officer |
|---|---|
| Japanese Patent Office | |
| Facsimile No. | Telephone No. |

Form PCT/ISA/210 (second sheet) (July 1992)